(19) Europäisches Patentamt
European Patent Office
Office européen des brevets

(11) **EP 1 106 991 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(51) Int Cl.:
***G01N 21/53*** *(2006.01)*      ***G01N 21/51*** *(2006.01)*
***G01N 15/05*** *(2006.01)*      ***G01N 33/49*** *(2006.01)*

(21) Anmeldenummer: **00126015.7**

(22) Anmeldetag: **28.11.2000**

(54) **Verfahren und Vorrichtung zur Bestimmung einer Partikelkonzentration**

Method and apparatus for determining particle concentration

Procédé et appareil pour déterminer la concentration de particules

(84) Benannte Vertragsstaaten:
**AT BE CH CY DE DK ES FI FR GB GR IE IT LI LU MC NL PT SE TR**

(30) Priorität: **01.12.1999 DE 19958729**

(43) Veröffentlichungstag der Anmeldung:
**13.06.2001 Patentblatt 2001/24**

(60) Teilanmeldung:
**10155054.9**

(73) Patentinhaber: **Fresenius HemoCare Beteiligungs GmbH**
**60323 Frankfurt am Main (DE)**

(72) Erfinder: **Meisberger, Artur**
**66606 St. Wendel (DE)**

(74) Vertreter: **Laufhütte, Dieter et al**
**Lorenz-Seidler-Gossel**
**Widenmayerstrasse 23**
**80538 München (DE)**

(56) Entgegenhaltungen:
**EP-A- 0 206 840      EP-A- 0 562 630**
**WO-A-97/22870      DE-A- 19 700 379**
**US-A- 5 241 369      US-A- 5 936 714**

**Beschreibung**

Die Erfindung betrifft ein Verfahren zur Bestimmung der Partikelkonzentration insbesondere einer medizinischen Suspension in einem Schlauchsystem.

Beispielsweise aus der EP 7 44 28 A ist es grundsätzlich bekannt, mittels gestreutem Licht die Konzentration von streuenden Suspensionen zu bestimmen. Mittels des vorbekannten Verfahrens können insbesondere die Blutkomponenten bestimmt werden. Diese quantitative Bestimmung der Partikelkonzentration erfordert die Messung der Intensität des Primärstrahls und der Intensität der unter bestimmten Winkeln auftretenden Streustrahlung der Probe, wobei die Meßsignale korrigiert werden, um geänderte physikalische Verhältnisse in der Probe zwischen den verschiedenen Messungen oder innerhalb einer Messung auszugleichen. Die korrigierten Meßsignale werden dann der Konzentration der zu bestimmenden Systemkomponente zugeordnet. Die Messungen werden nach der vorbekannten Lehre in einem Streuwinkelbereich vorgenommen, in dem die stärkste Abhängigkeit der Intensität der Streustrahlung von der Konzentration der zu bestimmenden Komponente vorliegt. Die im Stand der Technik verwendeten Sensorflächen sind aus mehreren Schichten aufgebaut, wobei jeweils eine lichtunempfindliche Deckschicht vorgesehen ist, in der definierte linienförmige Öffnungen angeordnet sind, die das Licht auf die unter der Deckschicht liegenden lichtempfindlichen Schichten hindurchtreten lassen. Diese definierten linienförmigen Öffnungen müssen präzise dem zu messenden Objekt sowie der Lichtquelle zugeordnet sein. Sollte beispielsweise eine durch einen Schlauch geleitete medizinische Suspension, wie beispielsweise Blut gemessen werden, so muß der Schlauch präzise der entsprechenden Sensorfläche mit den linienförmigen Öffnungen zugeordnet werden. Dies bedingt einen aufwendigen präzisen Aufbau sowie eine hohe Störanfälligkeit, soweit der Schlauch nicht gegenüber der Sensorfläche sicher fixiert ist.

WO 97/22870 offenbart ein Verfahren und eine Vorrichtung zur Bestimmung einer Partikelkonzentration durch Einsatz eines positionsempfindlichen Sensors vom CCD (charge coupled device) Typ.

Aus DE 19700379 ist die Anwendung eines Sensors mit einer Mehrzahl lichtempfangender Elemente zur Messung der Teilchengrössenverteitung mittels des Streueffekts bekannt.

Die europäische Patentanmeldung EP 206840 offenbart ein Abstandmessgerät, das ein positionsempfindlicher Sensor in Form einer PIN-Fotodiode aufweist.

Aufgabe der Erfindung ist es daher, ein gattungsgemäßes Verfahren so weiterzubilden, daß es in einem einfacheren Meßaufbau störunanfällig durchgeführt werden kann.

Erfindungsgemäß wird diese Aufgabe durch ein Verfahren mit den Schritten des Anspruchs 1 gelöst.

Bei dem Verfahren nach Anspruch 1 wird ein positionsempfindlicher Sensor auf der Basis einer großflächigen lichtempflindlichen Fläche - bevorzugt in Form einer PIN-Fotodiode - verwendet, bei der durch mindestens zwei positionsabhängige Abgriffe eine Positionierungsaussage gemacht werden kann, obwohl die lichtempflindliche Fläche homogen ausgestaltet ist. Mit einem solchen Sensor können ohne aufwendigen Meßaufbau und ohne die Gefahr von Störanfälligkeit problemlos Messungen des Streuverhaltens des partikelbeladenen kontinuierlichen Mediums durchgeführt werden können. Die Meßanordnung wird so gewählt, daß der durch Streulicht veränderte Lichtstrahl im Mittel eine andere Position einnimmt, wie der nicht gestreute Lichtstrahl. Diese Positionsänderung, die mittels der lichtempfindlichen Fläche des positionsempfindlichen Sensors (PSD) aufgenommen wird, kann als Maß für die Anzahl der Partikel herangezogen werden. Das bedeutet, daß eine entsprechende Positionsänderung einer bestimmten Partikelkonzentration zugeordnet werden kann.

Wesentlich bei dem Verfahren ist es, daß der Lichtstrahl so auf die lichtempfindliche Fläche gerichtet wird, daß das durch die Partikel gestreute Licht im Mittel eine andere Position einnimmt als das nicht gestreute Licht.

Dies kann entsprechend einer ersten Ausführungsvariante dadurch erreicht werden, daß der Lichtstrahl senkrecht auf die lichtempfindliche Fläche des positionsempfindlichen Sensors gerichtet ist und daß die lichtempfindliche Fläche teilweise derart abgedeckt ist, daß der auf diese auftreffende Lichtstrahl zumindest teilweise abgeschattet wird.

Alternativ kann der Lichtstrahl unter einem Winkel (w) auf die lichtempfindliche Fläche des positionsempfindlichen Sensors gerichtet sein.

Gemäß einer vorteilhaften Ausgestaltung des erfindungsgemäßen Verfahrens können mehr als ein Lichtstrahl auf die lichtempfindliche Fläche gerichtet werden. Diese unterschiedlichen Lichtquellen können auch unterschiedliche Wellenlängen aufweisen. Hierdurch wird es grundsätzlich möglich, den Einfluß der Lichtstreuer auf verschiedene Wellenlängen zu bestimmen. Werden die Lichtquellen gleichzeitig eingeschaltet, kann ein Differenzsignal ermittelt werden, mit dem beispielsweise bestimmbar ist, ob es sich um gleichartig oder unterschiedlich lichtstreuende Partikel handelt.

Eine Vorrichtung zur Durchführung des vorgenannten Verfahrens besteht erfindungsgemäß aus zumindest den Merkmalen des Anspruchs 6.

Mit der erfindungsgemäßen Vorrichtung ist es möglich, einen einzigen einfach aufgebauten Lichtsensor mit nur zwei elektrischen Signalen zu verwenden. Dadurch können Parameterstreuungen von Bauteilen, deren Temperaturgang und Alterung eliminiert werden.

Gemäß einer vorteilhaften Ausführungsform der Erfindung können als Lichtquelle eine einfache Leuchtdiode bzw. eine Laserdiode ohne weitere Optik eingesetzt werden.

Vorteilhaft können Meßbehältnisse unterschiedlicher Art eingesetzt werden. Sie können rund oder flach sein, starr oder flexibel. Beispielsweise lassen sich problemlos lichtdurchlässige Schläuche von medizinisch verwendeten Schlauchsystemen einsetzen.

Das Meßverfahren und die entsprechende Vorrichtung weisen eine hohe Empfindlichkeit auf, so daß sehr kleine Teilchenkonzentrationen bestimmbar sind. Des weiteren besteht nicht die Notwendigkeit einer aufwendigen Justierung von Lichtquelle und Sensor, da Meßsignale auch bei leicht verschobenen Abbildungen erhalten werden können.

Weitere Einzelheiten und Vorteile der Erfindung werden anhand von in der Zeichnung dargestellten Ausführungsbeispielen erläutert. Es zeigen:

Fig. 1:     den prinzipiellen Aufbau eines in der vorliegenden Erfindung verwendeten positionsempfindlichen Sensors (PSD).

Fig. 2:     ein Diagramm, in welchem die Empfangsintensität des aufgefangenen Lichts in Abhängigkeit von der Lage auf dem positionsempfindlichen Sen- sor dargestellt ist, wobei hier beispielshaft die Empfangsverhältnisse eines Aufbaus gemäß Fig. 4 dargestellt sind,

Fig.3:     ein Diagramm entsprechend der Fig. 2, jedoch für die Empfangsverhält- nisse einer Vorrichtung gemäß der Fig. 5.

Fig. 4:     eine prinzipielle Darstellung einer ersten Ausführungsform der vorliegen- den Erfindung,

Fig. 5:     eine prinzipielle Darstellung einer zweiten Ausführungsform der vorliegen- den Erfindung und

Fig. 6:     eine prinzipielle Darstellung einer dritten Ausführungsform der vorliegen- den Erfindung.

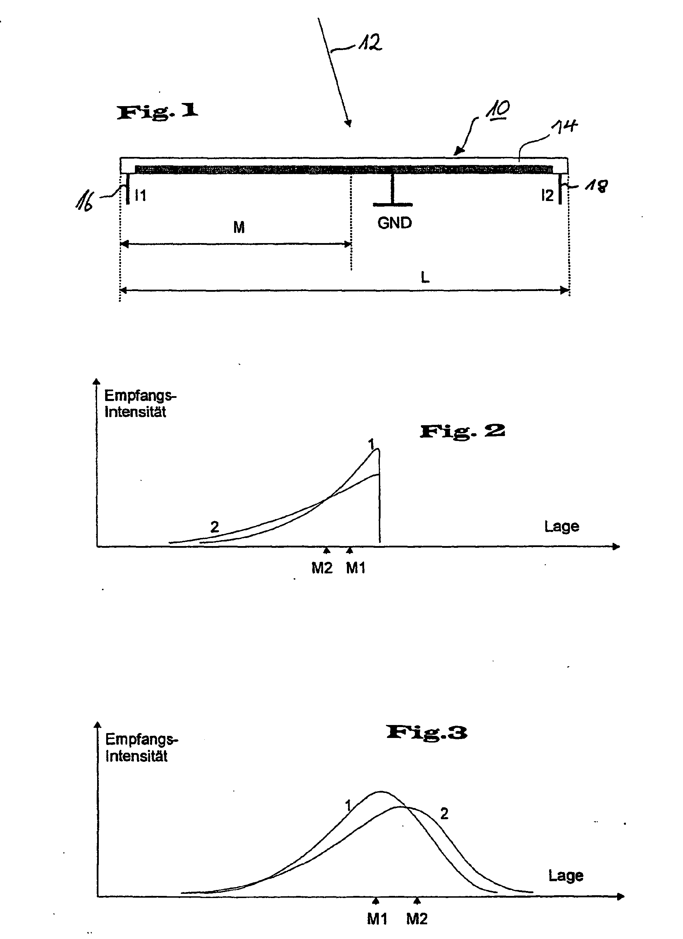

Anhand der Fig. 1 wird der grundsätzliche Aufbau des in der erfindungsgemäßen Lösung verwendeten Sensors 10 erläutert. Ein Lichtstrahl 12 einer hier nicht näher dargestellten Lichtquelle (primärer Lichtstrahl) wird auf eine lichtempfindliche Fläche 14 des positionsempfindlichen Sensors 10 gerichtet. Der Sensor weist zwei im Abstand L voneinander angeordnete Stromausgänge 16 und 18 auf, die als Stromausgang I1 (16) und I2 (18) in der Fig. 1 bezeichnet sind. Mittels der Stromausgänge 16 und 18 kann die Position M des einfallenden Lichtstrahls entlang der Sensorfläche bestimmt werden. Die Teilströme ergeben sich entsprechend der Stromteilerregel. Diese Eigenschaft macht sich die Erfindung zunutze. Ohne die Anwesenheit von Lichtstreuem (z.B. Zellen oder Partikel) liefern die beiden Ströme 11 und 12 eine Position, die als Referenz genommen werden kann.

Wird die Position so gewählt, daß der durch Streulicht veränderte Lichtstrahl im Mittel eine andere Position einnimmt wie der nicht gestreute Lichtstrahl, kann diese Positionsänderung als Maß für die Anzahl der Lichtstreuer herangezogen werden. Somit kann die Konzentration der Lichtstreuer bestimmt werden. Hierzu sind vorher einige Referenzmessungen durchzuführen, anhand derer eine Matrix, die unterschiedliche Konzentrationen einer Positionsänderung des gestreuten Lichtes gegenüberstellt, aufgenommen wird. Auf diese Referenzwerte kann dann bei der Messung eines partikelbeladenen kontinuierlichen Mediums zurückgegriffen werden, so daß die jeweils gemessene Abweichung einer entsprechenden Partikelkonzentration zugeordnet werden kann. Es ist auch möglich, eine bereits vorliegende Matrix durch eine Kalibrierungsmessung für eine Meßanordnung anzupassen, um geringe Toleranzen bei gleichartigen Systemen berücksichtigen zu können.

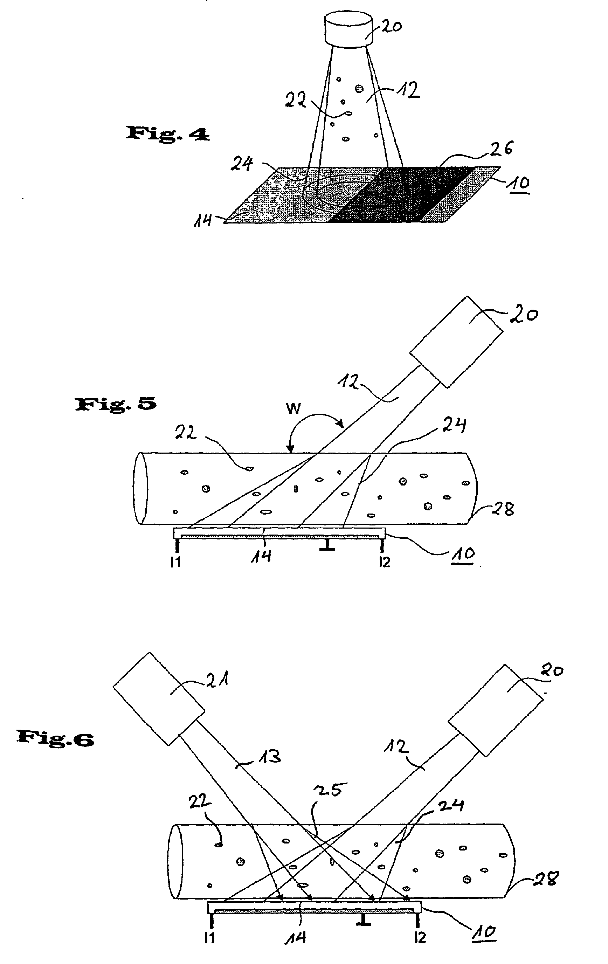

Ein Meßaufbau einer ersten Ausführungsform ist prinzipiell in Fig. 4 dargestellt. Dort wird von einer Lichtquelle, beispielsweise einer Leuchtdiode 20, ein Primärlichtstrahl 12 auf die lichtempfindliche Fläche 14 des Sensors 10 gerichtet, wobei der Lichtstrahl senkrecht auf die lichtempfindliche Fläche 14 ausgerichtet ist. Der aus der Laserdiode 20 austretende primäre Lichtstrahl 12 wird durch im Strahlengang verweilende Partikel 22, im vorliegenden Fall Zellen, gestreut, so daß sich ein aufgeweiteter Lichtstrahl 24 ergibt. Da aufgrund der senkrechten Ausrichtung der Lichtstrahlen 12 und 24 auf die lichtempfindliche Fläche 14 sich jeweils ein identischer rechnerischer Mittelpunkt ergibt, so daß auf der lichtempfindlichen Fläche keine Verschiebung des Mittelpunktes des Primärstrahls zu dem Mittelpunkt des durch die Streuung aufgeweiteten Lichtstrahls erfolgt, wird ein Teil der lichtempfindlichen Fläche 14 mit einer Abdeckung 26 abgeschattet. Hierdurch wird, wie in der Fig. 4 dargestellt, nur ein Teil des Lichtstrahls auf die lichtempfindliche Fläche 14 gerichtet.

Es ergibt sich bezüglich der aufgenommenen Empfangsintensität bezogen auf die Lage auf dem lichtempfindlichen Sensor eine Verteilung, wie sie beispielhaft in Fig. 2 dargestellt ist. Die Kurve 1 zeigt die Empfangsintensität des Primärstrahls, bei der sich ein rechnerischer Mittelpunkt bei M1 ergibt. Mit 2 ist die Empfangsintensität des aufgeweiteten Lichtstrahls 24 dargestellt, bei der sich ein rechnerischer Mittelpunkt M2 ergibt. Die Empfangsintensität geht naturgemäß an der Grenzlinie der Abdeckung 26 auf Null zurück. Entsprechend der Stromteilerregel können die Positionen der Mittelpunkte mit folgender Formel bestimmt werden:

EP 1 106 991 B1

$$(l1 - l2)/(l1 + l2) = 1 - 2\ (M/L).$$

In Fig. 5 ist eine zweite Ausführungsform dargestellt. Hier ist der aus der Laserdiode 20 austretende primäre Lichtstrahl 12 unter einem Winkel w schräg zu der Sensorfläche 14 des Sensors 10 ausgerichtet. Zwischen der Leuchtdiode 20 und der lichtempfindlichen Fläche 14 ist als Behältnis für die Zellen 22, deren Konzentration zu bestimmen ist, eine Schlauchleitung 28 angeordnet. Durch die streuenden Zellen 22 wird der Primärstrahl 12 aufgeweitet, so daß sich der aufgeweitete Lichtstrahl 24 ergibt. Die resultierende Lichtverteilung auf die lichtempfindliche Fläche 14 des Sensors 10 ist in Fig. 3 wiedergegeben. Hier entspricht die Kurve 1 der Empfangsintensität des Primärstrahls und die Kurve 2 der Empfangsintensität des aufgeweiteten Lichtstrahls 24. M1 ist der rechnerische Mittelpunkt, der zur Kurve 1 und somit zum Primärstrahl 12 gehört, während M2 der Mittelpunkt der Empfangsintensitätskurve 2 des aufgeweiteten Lichtstrahles 24 ist.

In der in Fig. 6 dargestellten Anordnung sind zwei Laserdioden 20 und 21 als Lichtquellen gewählt, wobei diese jeweils Laserlicht unterschiedlicher Wellenlänge als Primärstrahlen 12 und 13 aussenden. Der Primärlichtstrahl 12 wird durch die Zellen 22 in den Lichtstrahl 24 aufgeweitet, während der Primärlichtstrahl 13 in den Lichtstrahl 25 aufgeweitet wird. Dadurch, daß die Strahlen 12 und 13 unterschiedliche Wellenlängen aufweisen, kann der Einfluß der Lichtstreuer auf die verschiedenen Wellenlängen bestimmt werden. Werden die Laserdioden 20 und 21 gleichzeitig eingeschaltet, kann ein Differenzsignal ermittelt werden. Mit diesem Differenzsignal kann beispielsweise bestimmt werden, ob es sich um gleichartige oder unterschiedliche Lichtstreuer handelt.

Anstelle der in Fig. 1 gezeigten Ausführungsform mit zwei Stromausgängen kann auch eine flächenförmige Fotodiode mit 2x2 Ausgängen Verwendung finden. Dann kann der Mittelpunkt M zweidimensional ermittelt werden.

## Patentansprüche

1.  Verfahren zur Bestimmung der Partikelkonzentration insbesondere einer medizinischen Suspension in einem Schlauchsystem mit folgenden Schritten:

    - Ausrichten eines Lichtstrahls aus einer Lichtquelle durch ein partikelbeladenes kontinuierliches Medium auf die lichtempfindliche Fläche eines positionsempfindlichen Sensors (PSD) mit zumindest einem ersten und einem zweiten Abgriff; wobei der Lichtstrahl so auf die lichtempfindliche Fläche gerichtet wird, dass der durch Streuung veränderte Lichtstrahl im Mittel eine andere Position einnimmt als der nicht gestreute Lichtstrahl,
    - Messung eines ersten Teilstromes an dem erten Abgriff und eines zweiten Teilstromes an dem zweiten Abgriff entsprechend der Stromteilerregel für den postionsempfindlichen Sensor und Ermittlung der Abweichung des Mittelpunktes des durch Streuung veränderten Lichtstrahls auf der Lichtempfindlichen Fläche von dem Mittelpunkt des nicht gestreuten Lichtstrahls auf der lichtempflindlichen Fläche durch Berechnung aus dem ersten Teilstrom und dem zweiten Teilstrom, und
    - Zuordnung der ermittelten Abweichung zu Referenzwerten zur Bestimmung der Partikelkonzentration.

2.  Verfahren nach Anspruch 1, **dadurch gekennzeichnet, daß** der Lichtstrahl senkrecht auf die lichtempfindliche Fläche des positionsempfindlichen Sensors gerichtet ist und daß diese teilweise abgedeckt ist.

3.  Verfahren nach Anspruch 1, **dadurch gekennzeichnet, daß** der Lichtstrahl unter einem Winkel (w) auf die lichtempfindliche Fläche des positionsempfindlichen Sensors gerichtet ist.

4.  Verfahren nach einem der Ansprüche 1 bis 3, **dadurch gekennzeichnet, daß** mindestens zwei Lichtstrahlen auf die lichtempfindliche Fläche gerichtet werden.

5.  Verfahren nach Anspruch 4, **dadurch gekennzeichnet, daß** die mindestens zwei Lichtstrahlen zumindest teilweise unterschiedliche Wellenlängen aufweisen.

6.  Vorrichtung zur Durchführung eines Verfahrens nach einem der Ansprüche 1 bis 5, **gekennzeichnet durch**

    - zumindest eine Lichtquelle,
    - ein Behältnis zur Aufnahme oder Durchleitung des partikelbeladenen kontinuierlichen Mediums,
    - einen positionsempfindlichen Sensor mit einem ersten und einem zweiten entfernt voneinander angeordneten Stromausgang (PSD) wobei sich ein erster Teilstrom an dem ersten Stromausgang und ein zweiter Teilstrom an den zweiten Stromausgang entsprechend der Stromteilerregel für den positionsempfindlichen Sensor abhängig vom Mittelpunkt des Lichtstrahls ergibt und - Mittel zur Bestimmung der Partikelkonzentration **durch** Zuordnung der ermittelten Abweichung zu Referenzwerten.

**7.** Vorrichtung nach Anspruch 6, wobei der positionsempfindliche Sensor eine flächenförmige Fotodiode mit zwei mal zwei Stromausgängen ausfweist.

**8.** Vorrichtung nach Anspruch 6 oder 7, **dadurch gekennzeichnet, daß** die Lichtquelle eine Laserdiode oder eine Leuchtdiode ist.

**9.** Vorrichtung nach einem der Ansprüche 6 bis 8, **dadurch gekennzeichnet, daß** zwei Laserdioden als Lichtquellen diessen, wobei diese Laserlicht unterschiedlicher Wellenlänge als Primärstrahlen aussenden.

**10.** Verwendung des Verfahrens nach einem der Ansprüche 1 bis 5 bzw. der Vorrichtung nach einem der Ansprüche 6 bis 9 zur Bestimmung der Blutpartikel-konzentration in einem Zellseparator.

**Claims**

**1.** A method for determining the particle concentration, in particular of a medical suspension, in a hose system, comprising the following steps:

- aligning a light beam from a light source through a particle-charged continuous medium onto the light-sensitive surface of a position-sensitive detector (PSD) with at least one first pick-up and one second pick-up, wherein the light beam is directed onto the light-sensitive surface such that the light beam changed by scattering adopts a different position on average than the non-scattered light beam;
- measuring a first part current at the first pick-up and a second part current at the second pick-up in accordance with the current divider rule for the position-sensitive detector and determining the deviation of the center of the light beam changed by scattering on the light-sensitive surface from the center of the non-scattered light beam on the light-sensitive surface by calculation from the first part current and from the second part current; and
- associating the determined deviation from reference values to determine the particle concentration.

**2.** A method in accordance with claim 1, **characterized in that** the light beam is directed perpendicular onto the light-sensitive surface of the position-sensitive detector; and **in that** said light-sensitive surface is partly covered.

**3.** A method in accordance with claim 1, **characterized in that** the light beam is directed onto the light-sensitive surface of the position-sensitive detector at an angle (w).

**4.** A method in accordance with one of the claims 1 to 3, **characterized in that** at least two light beams are directed onto the light-sensitive surface.

**5.** A method in accordance with claim 4, **characterized in that** the at least two light beams have at least partly different wavelengths.

**6.** An apparatus for carrying out a method in accordance with one of the claims 1 to 5, **characterized by**

- at least one light source;
- a container for the reception or conveying of the particle-charged continuous medium;
- a position-sensitive detector (PSD) having a first current output and a second current output arranged remote from one another, wherein a first part current results at the first current output and a second part current results at the second current output in accordance with the current divisor rule for the position-sensitive detector in dependence on the center of the light beam; and
- means for determining the particle concentration by association of the determined deviation from reference values.

**7.** An apparatus in accordance with claim 6, wherein the position-sensitive detector has an areal photodiode having two by two power outputs.

8. An apparatus in accordance with either of claims 6 or 7, **characterized in that** the light source is a laser diode or a light-emitting diode.

9. An apparatus in accordance with one of the claims 6 to 8, **characterized in that** two laser diodes serve as light sources, wherein they transmit laser light of different wavelengths as primary beams.

10. Use of the method in accordance with one of the claims 1 to 5 or of the apparatus in accordance with one of the claims 6 to 9 for determining the blood particle concentration in a cell separator.

**Revendications**

1. Procédé destiné à la détermination de la concentration de particules notamment une suspension médicale dans un système de tuyaux avec les étapes suivantes :

   - Alignement d'un rayon lumineux à partir d'une source lumineuse par un fluide continu chargé en particules sur la surface sensible à la lumière d'un capteur sensible à la position (PSD) avec au moins un premier et un deuxième prélèvement, le rayon lumineux étant ainsi aligné vers la surface sensible à la lumière de manière à ce que le rayon lumineux modifié par dispersion adopte une autre position dans le milieu que le rayon lumineux non dispersé,
   - Mesure d'un premier courant partiel sur le premier prélèvement et d'un deuxième courant partiel sur le deuxième prélèvement en fonction de la règle de répartition du courant pour le capteur sensible à la position et détection du point central du rayon lumineux modifié par dispersion sur la surface sensible à la lumière du point central du rayon lumineux non dispersé sur la surface sensible à la lumière par calcul à partir du premier courant partiel et du deuxième courant partiel et
   - Affectation de la déviation détectée par rapport aux valeurs de référence afin de déterminer la concentration des particules.

2. Procédé selon la revendication 1, **caractérisée en ce que** le rayon lumineux est orienté verticalement sur la surface sensible à la lumière du capteur sensible à la position ayant ce que celui-ci est recouvert partiellement.

3. Procédé selon la revendication 1, **caractérisée en ce que** le rayon lumineux est orienté au-dessous d'un angle (w) vers la surface sensible à la lumière du capteur sensible à la position.

4. Procédé selon une quelconque des revendications 1 à 3, **caractérisée en ce que**, un minimum de rayons lumineux est orienté sur la surface sensible à la lumière.

5. Procédé selon la revendication quatre 4, caractérisant ce que le minimum de deux rayons lumineux présente des longueurs d'onde différentes au moins en partie.

6. Dispositif destiné à l'exécution d'un procédé mon selon une des quelconques revendications 1 à 5, **caractérisé par**

   - Au moins une source lumineuse,
   - Un récipient destiné à accueillir ou à transférer le fluide continu chargé en particules,
   - Un capteur sensible à la position (PSD) avec une première et une deuxième sortie de courant disposé à distance l'une de l'autre, un premier courant partiel étant obtenu sur la première sortie de courant et un deuxième courant partiel sous la deuxième sortie de courant en fonction de la règle de répartition du courant pour le capteur sensible à la position de manière dépendante du point central du rayon lumineux et
   - Des moyens de détermination de la concentration des particules par l'affectation de la différence détectée par rapport aux valeurs de référence.

7. Dispositif selon la revendication 6, le capteur sensible à la position présentant une diode photo planiforme avec deux fois deux sorties de courant.

8. Dispositif selon la revendication 6 ou 7, **caractérisé en ce** la source lumineuse est une diode laser ou une diode luminescente.

9. Dispositif selon une quelconque des revendications 6 à 8, **caractérisé en ce que** deux diodes laser servent de sources lumineuses, cette lumière laser émettant une longueur d'onde différente à celle des rayons primaires.

10. Utilisation du procédé selon une quelconque des revendications 1 à 5 ou du dispositif selon une quelconque des revendications 6 à 9 destinées à déterminer la concentration de particules sanguines dans un séparateur de cellules.

**Fig. 1**

M

GND

L

I1    I2

**Fig. 2**

Empfangs-
Intensität

1

2

Lage

M2  M1

**Fig. 3**

Empfangs-
Intensität

1      2

Lage

M1    M2

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 74428 A
- WO 9722870 A
- DE 19700379
- EP 206840 A